(19) **Europäisches Patentamt**

**European Patent Office**

**Office européen des brevets**

(11) **EP 1 509 036 A2**

(12) **EUROPEAN PATENT APPLICATION**

(43) Date of publication:
**23.02.2005 Bulletin 2005/08**

(51) Int Cl.⁷: **H04N 1/60**, H04N 1/387

(21) Application number: **04018952.4**

(22) Date of filing: **10.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **18.08.2003 JP 2003294061**

(71) Applicant: **Konica Minolta Medical & Graphic Inc.
Tokyo 163-0512 (JP)**

(72) Inventor: **Nakamori,Hiroshi
Konica Minolta Med. & Graphic Inc
Hachioji-shi Tokyo 192-8505 (JP)**

(74) Representative: **Henkel, Feiler & Hänzel
Möhlstrasse 37
81675 München (DE)**

(54) **Image outputting system**

(57)     There is described an image outputting system for outputting images as color samples for proof of a large-sized image greater than the allowed image output region of the image outputting apparatus. Further, there is described an image outputting system, a controlling apparatus, an image dividing method, a program to execute the method, and a storage medium having the program, wherein, in the case of dividing and outputting image data of a large sized image which is too large to be recorded on a recording medium, it is possible to perform dividing-output of the image in a proper direction of image output and on recording media of a proper size so that the number of recording media on which to output the image is minimized and the blank region in which image is not recorded is minimized.

**EP 1 509 036 A2**

## Description

## BACKGROUND OF THE INVENTION

The present invention relates to an image outputting system, a controlling apparatus, an image dividing method, a program to execute the method, and a storage medium having the program, and particularly relates to those for output of images as color samples for proof of an image of a large size greater than the allowed image output region of an image outputting apparatus.

In recent years, with diffusion of DTP (Desk Top Publishing) and the like, image editing, by the use of computer software, of an image that is input from a scanner followed by page-imposing is widely performed, where fully digital editing has become more usual.

In such processing, further efficiency is pursued by performing: image setter output that directly outputs, on a film, image data having been subjected to page-imposition; CTP (Computer to Plate) output that directly records an image on a printing plate; and further CTC (Computer to Cylinder) that directly records an image on a printing plate winded around a cylinder of a printing machine.

In this situation, performing output on a film, a printing plate, or the like, only for proof and confirmation, and then performing printing proof or proof with other proofing materials, causes a problem of wasting films or wasting printing plates, and requiring extra work.

Therefore, in such a process of fully digital image forming and editing by a computer, a system for performing direct output of color images, called DDCP (Direct Digital Color Proof), is required.

The object of DDCP described above is to create a DCP (Digital Color Proof), which is a color sample simulating an image, and to confirm pictures, color tones, and sentences and characters of the DCP, before recording image data having been subjected to page-imposition by an image setter or the like on a film for plate making, performing final printing works to directly produce a printing plate by CTP, or directly recording by CTC the image on a printing plate winded around a cylinder of a printing machine.

Further, with such a DCP creating system, image data (image data before imposing pages) of each single page is output in a small size by a color laser printer, and pictures, color tones, and sentences and characters of a color comprehensive layout, which is the resulted output, are confirmed, before creating the DCP.

That is, in a printing plate making process, usually, a color comprehensive layout or DCP is created for confirming pictures, color tones, and sentences and characters, of an output object, and color proof is performed, before performing final printing work.

Recently, the performance of a color laser printer has been increased, enabling color output at low cost, at high speed, and with high quality. Accordingly, demand for using such a color laser printer for the purpose of creating a color comprehensive layout has risen.

Such a color laser printer can be a color laser printer by an elecrtophotographic method, the color laser printer being disclosed in TOKKAI No. H05-6066, and a multifunctional machine incorporating the functions of a scanner, copier, and facsimile (refer to Patent Document 1, for example).

Image data used for color proof is preferably the same as the image data output to a CTP that performs final printing, or the like, in terms of quality guarantee on processing. This image data is a digital file after undergoing a process in which image data (image data described in PostScript which is a general purpose page describing language or PDF) formed by imposing pages is analyzed and processed (rasterized or outlined vector data such as character font information) by an RIP (Raster Image Processor) connected to a CTP. This image data is used on the CTP and a DCP back-and-forth, thereby reducing a RIP processing time and preventing difference in the output result due to difference in RIP processing.

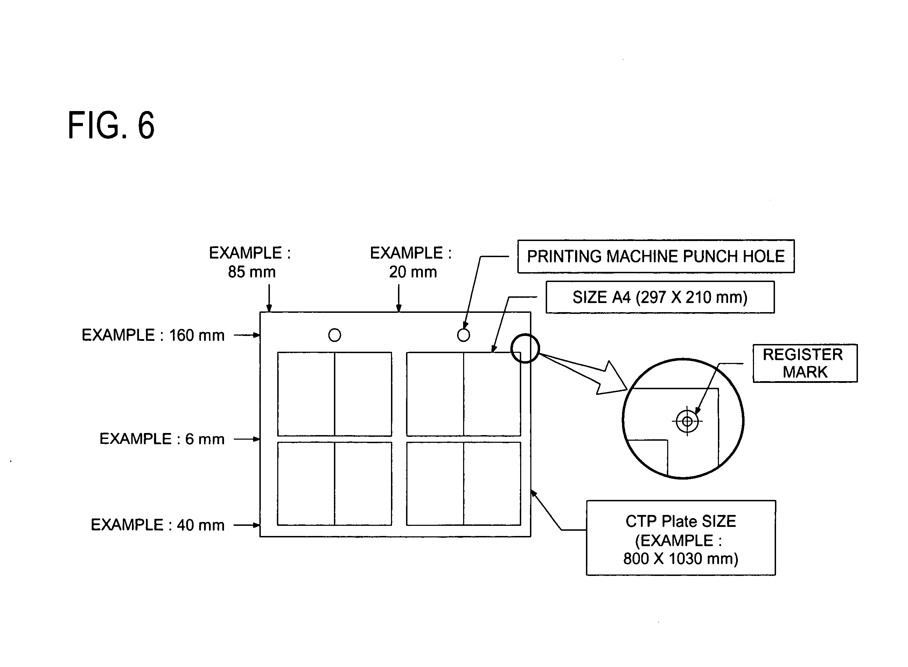

However, image data output by CTP is, as shown in Fig. 6, usually image data of a large size (for example, A1 wide size (longitudinal length 800 mm x lateral length 1030 mm), which is produced by adding margins (register mark regions and punch regions for a CTP Plate) to image data created by imposing a subset of image data (for example, imposing a subset of 8 image data) of a small size (for example, size A4 (longitudinal length 297 mm x lateral length 210 mm). On the other hand, the output sizes of most of the current color laser printers are A3 wide (longitudinal length 457 mm x lateral length 311 mm) at largest. Therefore, it is practically impossible to output image data of such a large size, which causes a problem in using it to create a DCP.

With a color laser printer, to output image data of an image size that is too large to be recorded onto a recording medium, usually, the output size of the image data is reduced, or the output direction of the image data is turned (for example, refer to Patent Document 2), as in the case of an image forming apparatus disclosed in TOKKAI No. H06-86050 for example, with which the above problem still remains.

To solve such a problem, using an image processing apparatus disclosed in TOKKAI No. H05-37768, for example, or other steps can be considered. With such an image processing apparatus, image data of a large size is divided into a subset of image data of the allowed output size of a medium, and is output in parts with partial overlap. By pasting the output results, an image of a large size is finally obtained to be used as a DCP (refer to Patent Document 3, for example).

[Patent Document 1]

Tokkaihei 5-6066

[Patent Document 2]

Tokkaihei 6-86050

[Patent Document 3]

Tokkaihei 5-37768

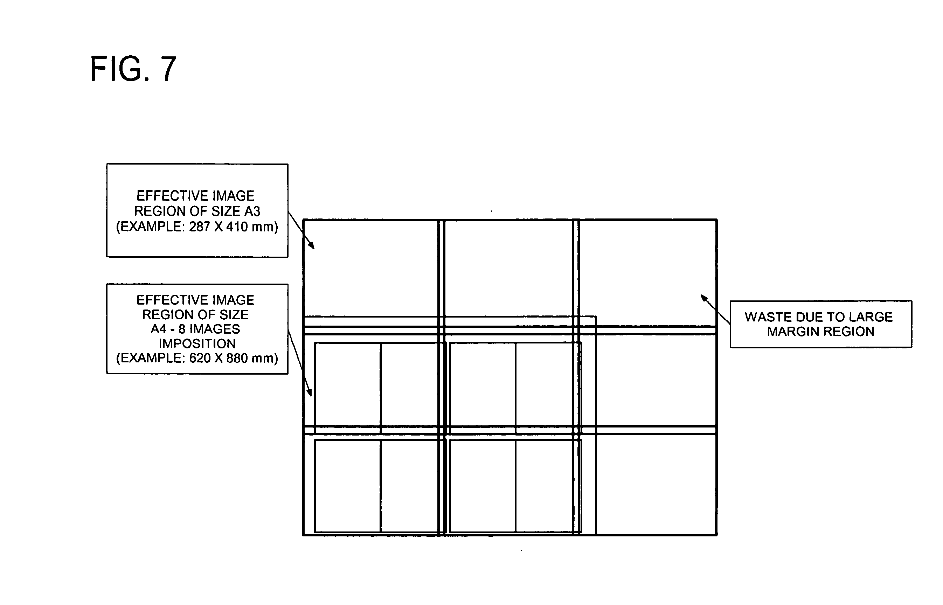

However, with such an image processing apparatus, as the direction of an image to be recorded on a recording medium is determined in advance, in the case, as shown in Fig. 7 for example, that image data of A1 wide size (effective image region: longitudinal length 620 mm x lateral length 880 mm), the image data having been produced by imposing a subset of 8 image data of A4 size, is divided and output on recording media of A3 wide size (effective image area: longitudinal length 287 mm x lateral length 410 mm), a large amount of recording media having a large region in which almost no image is recorded may be output.

Especially, this problem occurs on image data for CTP having the above described margins (register mark regions and punch regions for a CTP Plate) more frequently than on general image data. Therefore, to avoid this problem, it is necessary to rotate an image and select the size of recording media in advance so that dividing-output is properly performed.

## SUMMARY OF THE INVENTION

The present invention has been devised, taking into account of the above problems. To overcome the abovementioned drawbacks in conventional image-outputting systems, it is an object of the present invention to provide an image outputting system, a controlling apparatus, an image dividing method, a program to execute the method, and a storage medium having the program, wherein, in the case of dividing and outputting image data of a large sized image which is too large to be recorded on a recording medium, it is possible to perform dividing-output of the image in a proper direction of image output and on recording media of a proper size so that the number of recording media on which to output the image is minimized and the blank region in which image is not recorded is minimized.

Accordingly, to overcome the cited shortcomings, the abovementioned object of the present invention can be attained by image outputting systems, controlling apparatus, image data dividing methods, computer programs and a storage medium described as follow.

(1) An image outputting system, comprising: a controlling apparatus that receives a bulk image data of a large-sized image from an external apparatus and divides the bulk image data into a plurality of image data sets, each of which represents each of divided images included in the large-sized image, so as to transmit the plurality of image data sets;

and an image outputting apparatus that receives the plurality of image data sets divided by the controlling apparatus and outputs the divided images based on the plurality of image data sets; wherein the controlling apparatus includes: an image-area storing section to store in advance a first longitudinal length and a first lateral length of an image area recordable for the image outputting apparatus corresponding to a size of a recording medium to be employed; an image-data storing section to store the bulk image data of the large-sized image received from the external apparatus; an image-size finding section to find a second longitudinal length and a second lateral length of the large-sized image based on the image data stored in the image-data storing section; a dividing-number calculating section to calculate a first dividing number, based on a ratio between the first longitudinal length and the second longitudinal length and another ratio between the first lateral length and the second lateral length, and at a same time, to calculate a second dividing number, based on a ratio between the first longitudinal length and the second lateral length and another ratio between the first lateral length and the second longitudinal length; a comparing section to compare the first dividing number with the second dividing number, so as to determine either the first dividing number or the second dividing number as a selected dividing number that is equal to or smaller than the other; and an image dividing section to divide the bulk image data, stored in the image-data storing section, into the plurality of image data sets by employing the selected dividing number and a dividing pattern corresponding to the selected dividing number, so as to transmit the plurality of image data sets to the image outputting apparatus.

(2) An image outputting system, comprising: a controlling apparatus that receives a bulk image data of a large-sized image from an external apparatus and divides the bulk image data into a plurality of image data sets, each of which represents each of divided images included in the large-sized image, so as to transmit the plurality of image data sets; and an image outputting apparatus that receives the plurality of image data sets divided by the controlling apparatus and outputs the divided images based on the plurality of image data sets; wherein the controlling apparatus includes: an image-area storing section to store in advance first longitudinal lengths and first lateral lengths of an image areas recordable for the image outputting apparatus corresponding to sizes of plural kinds of recording mediums to be employed; an image-data storing section to store the bulk image data of the large-sized image received from the external apparatus; an image-size finding section to find a second longitudinal length and a second lateral length of the large-sized image based on the image data stored in the image-data storing section; a dividing-number calculating section to calculate first dividing numbers, based on ratios between the first longitudinal lengths and the second longitudinal length and other ratios between the first lateral lengths and the second lateral length, and at a same time, to calculate second dividing numbers, based on ratios between the first longitudinal lengths and the second lateral length and other ratios between the first lateral lengths and the second longitudinal length; a selecting section to select a specific image area, which corresponds to a minimum first dividing number or a minimum second dividing number among the first dividing numbers and the second dividing numbers, out of the image areas; a comparing section to compare the first dividing number of the specific image area with the second dividing number of the specific image area selected by the selecting section, so as to determine either the first dividing number or the second dividing number as a selected dividing number that is equal to or smaller than the other; and an image dividing section to divide the bulk image data, stored in the image-data storing section, into the plurality of image data sets by employing the selected dividing number and a dividing pattern corresponding to the selected dividing number, so as to transmit the plurality of image data sets to the image outputting apparatus.

(3) The image outputting system of item 2, wherein, when plural kinds of image areas correspond to the minimum first dividing number or the minimum second dividing number, the selecting section selects an image area, a size of which is minimum among the plural kinds of image areas, as the specific image area.

(4) An image outputting system, comprising: a controlling apparatus that receives a bulk image data of a large-sized image from an external apparatus and divides the bulk image data into a plurality of image data sets, each of which represents each of divided images included in the large-sized image, so as to transmit the plurality of image data sets; and an image outputting apparatus that receives the plurality of image data sets divided by the controlling apparatus and outputs the divided images based on the plurality of image data sets; wherein the controlling apparatus includes: an image-area storing section to store in advance first longitudinal lengths and first lateral lengths of an image areas recordable for the image outputting apparatus corresponding to sizes of plural kinds of recording mediums to be employed; an image-data storing section to store the bulk image data of the large-sized image received from the external apparatus; an image-size finding section to find a second longitudinal length and a second lateral length of the large-sized image based on the image data stored in the image-data storing section; a dividing-number calculating section to calculate first dividing numbers, based on ratios between the first longitudinal lengths and the second longitudinal length and other ratios between the first lateral lengths and the second lateral length, and at a same time, to calculate second dividing numbers, based on ratios between the first longitudinal lengths and the second lateral length and other ratios between the first lateral lengths and the second longitudinal length; a total-area calculating section to calculate total image areas, based on the first dividing numbers, the second dividing numbers and sizes of the image areas; a selecting section to select a specific image area, corresponding to a specific total image area for which a difference between the specific total image area and a size of the large-sized image is minimum among the total image areas calculated by the total-area calculating section; a comparing section to compare the first dividing number of the specific image area with the second dividing number of the specific image area selected by the selecting section, so as to determine either the first dividing number or the second dividing number as a selected dividing number that is equal to or smaller than the other; and an image dividing section to divide the bulk image data, stored in the image-data storing section, into the plurality of image data sets by employing the selected dividing number and a dividing pattern corresponding to the selected dividing number, so as to transmit the plurality of image data sets to the image outputting apparatus.

(5) The image outputting system of item 4, wherein the controlling apparatus further includes: a duplication-width designating section to designate a duplication width of the divided images; and wherein the total-area calculating section calculates the total image areas, each of which correspond to each of the first dividing numbers and each of the second dividing numbers, according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where,

S: Total image area corresponding to First dividing number,

V: First longitudinal length,

M: First dividing number in longitudinal direction,

T: Duplication width designated by the duplication-width designating section,

H: First lateral length,

N: First dividing number in lateral direction,

S': Total image area corresponding to Second dividing number,

M': Second dividing number in longitudinal direction,

N': Second dividing number in lateral direction.

(6) The image outputting system of item 4, wherein, when plural kinds of image areas correspond to a specific total image area for which a difference between the specific total image area and a size of the large-sized image is minimum among the total image areas calculated by the total-area calculating section, the selecting section selects an image area, a size of which is minimum among the plural kinds of image areas, as the specific image area.

(7) The image outputting system of item 1, wherein a plurality of small-sized images are laid out on the large-sized image, and the large-sized image includes image areas, on which the plurality of small-sized images are laid out, and margin areas in which register marks, serving as working indicators for cutting, binding and/or multicolor printing operations, and punching holes are formed.

(8) The image outputting system of item 1, wherein the image outputting apparatus is a color laser printer that outputs the divided images as printed color samples for conducting a proofreading operation.

(9) A controlling apparatus that receives a bulk image data of a large-sized image from an external apparatus and divides the bulk image data into a plurality of image data sets, each of which represents each of divided images included in the large-sized image, so as to transmit the plurality of image data sets to an image outputting apparatus that outputs the divided images based on the plurality of image data sets, the controlling apparatus comprising: an image-area storing section to store in advance a first longitudinal length and a first lateral length of an image area recordable for the image outputting apparatus corresponding to a size of a recording medium to be employed; an image-data storing section to store the bulk image data of the large-sized image received from the external apparatus; an image-size finding section to find a second longitudinal length and a second lateral length of the large-sized image based on the image data stored in the image-data storing section; a dividing-number calculating section to calculate a first dividing number, based on a ratio between the first longitudinal length and the second longitudinal length and another ratio between the first lateral length and the second lateral length, and at a same time, to calculate a second dividing number, based on a ratio between the first longitudinal length and the second lateral length and another ratio between the first lateral length and the second longitudinal length; a comparing section to compare the first dividing number with the second dividing number, so as to determine either the first dividing number or the second dividing number as a selected dividing number that is equal to or smaller than the other; and an image dividing section to divide the bulk image data, stored in the image-data storing section, into the plurality of image data sets by employing the selected dividing number and a dividing pattern corresponding to the selected dividing number, so as to transmit the plurality of image data sets to the image outputting apparatus.

(10) A controlling apparatus that receives a bulk image data of a large-sized image from an external apparatus and divides the bulk image data into a plurality of image data sets, each of which represents each of divided images included in the large-sized image, so as to transmit the plurality of image data sets to an image outputting apparatus that outputs the divided images based on the plurality of image data sets, the controlling apparatus comprising: an image-area storing section to store in advance first longitudinal lengths and first lateral lengths of an image areas recordable for the image outputting apparatus corresponding to sizes of plural kinds of recording mediums to be employed; an image-data storing section to store the bulk image data of the large-sized image received from the external apparatus; an image-size finding section to find a second longitudinal length and a second lateral length of the large-sized image based on the image data stored in the image-data storing section; a dividing-number calculating section to calculate first dividing numbers, based on ratios between the first longitudinal lengths and the second longitudinal length and other ratios between the first lateral lengths and the second lateral length, and at a same time, to calculate second dividing numbers, based on ratios between the first longitudinal lengths and the second lateral length and other ratios between the first lateral lengths and the second longitudinal length; a selecting section to select a specific image area, which corresponds to a minimum first dividing number or a minimum second dividing number among the first dividing numbers and the second dividing numbers, out of the image areas; a comparing section to compare the first dividing number of the specific image area with the second dividing number of the specific image area selected by the selecting section, so as to determine either the first dividing number or the second dividing number as a selected dividing number that is equal to or smaller than the other; and an image dividing section to divide the bulk image data, stored in the image-data storing section, into the plurality of image data sets by employing the selected dividing number and a dividing pattern corresponding to the selected dividing number, so as to transmit the plurality of image data sets to the image outputting apparatus.

(11) The controlling apparatus of item 10, wherein, when plural kinds of image areas correspond to the minimum first dividing number or the minimum second dividing number, the selecting section selects an image area, a size of which is minimum among the plural kinds of image areas, as the specific image area.

(12) A controlling apparatus that receives a bulk image data of a large-sized image from an external apparatus and divides the bulk image data into a plurality of image data sets, each of which represents each of divided images included in the large-sized image, so as to transmit the plurality of image data sets to an image outputting apparatus that outputs the divided images based on the plurality of image data sets, the controlling apparatus comprising: an image-area storing section to store in advance first longitudinal lengths and first lateral lengths of an image areas recordable for the image outputting apparatus corresponding to sizes of plural kinds of recording mediums to be employed; an image-data storing section to store the bulk image data of the large-sized image received from the external apparatus; an image-size finding section to find a second longitudinal length and a second lateral length of the large-sized image based on the image data stored in the image-data storing section; a dividing-number calculating section to calculate first dividing numbers, based on ratios between the first longitudinal lengths and the second longitudinal length and other ratios between the first lateral lengths and the second lateral length, and at a same time, to calculate second dividing numbers, based on ratios between the first longitudinal lengths and the second lateral length and other ratios between the first lateral lengths and the second longitudinal length; a total-area calculating section to calculate total image areas, based on the first dividing numbers, the second dividing numbers and sizes of the image areas; a selecting section to select a specific image area, corresponding to a specific total image area for which a difference between the specific total image area and a size of the large-sized image is minimum among the total image areas calculated by the total-area calculating section; a comparing section to compare the first dividing number of the specific image area with the second dividing number of the specific image area selected by the selecting section, so as to determine either the first dividing number or the second dividing number as a selected dividing number that is equal to or smaller than the other; and an image dividing section to divide the bulk image data, stored in the image-data storing section, into the plurality of image data sets by employing the selected dividing number and a dividing pattern corresponding to the selected dividing number, so as to transmit the plurality of image data sets to the image outputting apparatus.

(13) The controlling apparatus of item 12, further comprising: a duplication-width designating section to designate a duplication width of the divided images; wherein the total-area calculating section calculates the total image areas, each of which correspond to each of the first dividing numbers and each of the second dividing numbers, according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where,

S:   Total image area corresponding to First dividing number,
V:   First longitudinal length,
M:   First dividing number in longitudinal direction,
T:   Duplication width designated by the duplication-width designating section,
H:   First lateral length,
N:   First dividing number in lateral direction,
S':  Total image area corresponding to Second dividing number,
M':  Second dividing number in longitudinal direction,
N':  Second dividing number in lateral direction.

(14) The controlling apparatus of item 12, wherein, when plural kinds of image areas correspond to a specific total image area for which a difference between the specific total image area and a size of the large-sized image is minimum among the total image areas calculated by the total-area calculating section, the selecting section selects an image area, a size of which is minimum among the plural kinds of image areas, as the specific image area.

(15) The controlling apparatus of item 9, wherein a plurality of small-sized images are laid out on the large-sized image, and the large-sized image includes image areas, on which the plurality of small-sized images are laid out, and margin areas in which register marks, serving as working indicators for cutting, binding and/or multicolor printing operations, and punching holes are formed.

(16) The controlling apparatus of item 9, wherein the image outputting apparatus is a color laser printer that outputs the divided images as printed color samples for conducting a proofreading operation.

(17) A method for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, the method comprising the steps of: storing in advance a first longitudinal length and a first lateral length of an image area recordable for the image outputting apparatus corresponding to a size of a recording medium to be employed; storing the bulk image data of the large-sized image received from the external apparatus; finding a second longitudinal length and a second lateral length of the large-sized image based on the image data stored in the step of storing the bulk image data; calculating a first dividing number, based on a ratio between the first longitudinal length and the second longitudinal length and another ratio between the first lateral length and the second lateral length, and at a same time, calculating a second dividing number, based on a ratio between the first longitudinal length and the second lateral length and another ratio between the first lateral length and the second longitudinal length; comparing the first dividing number with the second dividing number, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

(18) A method for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, the method comprising the steps of: storing in advance first longitudinal lengths and first lateral lengths of an image areas recordable for the image outputting apparatus corresponding to sizes of plural kinds of recording mediums to be employed; storing the bulk image data of the large-sized image received from the external apparatus; finding a second longitudinal length and a second lateral length of the large-sized image based on the image data stored in the step of storing the bulk image data; calculating first dividing numbers, based on ratios between the first longitudinal lengths and the second longitudinal length and other ratios between the first lateral lengths and the second lateral length, and at a same time, calculating second dividing numbers, based on ratios between the first longitudinal lengths and the second lateral length and other ratios between the first lateral lengths and the second longitudinal length; selecting a specific image area, which corresponds to a minimum first dividing number or a minimum second dividing number among the first dividing numbers and the second dividing numbers, out of the image areas; comparing the first dividing number of the specific image area with the second dividing number of the specific image area selected in the selecting step, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

(19) The method of item 18, wherein, when plural kinds of image areas correspond to the minimum first dividing number or the minimum second dividing number, the selecting section selects an image area, a size of which is minimum among the plural kinds of image areas, as the specific image area.

(20) A method for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, the method comprising the steps of: storing in advance first longitudinal lengths and first lateral lengths of an image areas recordable for the image outputting apparatus corresponding to sizes of plural kinds of recording mediums to be employed; storing the bulk image data of the large-sized image received from the external apparatus; finding a second longitudinal length and a second lateral length of the large-sized image based on the image data stored in the step of storing the bulk image data; calculating first dividing numbers, based on ratios between the first longitudinal lengths and the second longitudinal length and other ratios between the first lateral lengths and the second lateral length, and at a same time, calculating second dividing numbers, based on ratios between the first longitudinal lengths and the second lateral length and other ratios between the first lateral lengths and the second longitudinal length; calculating total image areas, based on the first dividing numbers, the second dividing numbers and sizes of the image areas; selecting a specific image area, corresponding to a specific total image area for which a difference between the specific total image area and a size of the large-sized image is minimum among the total image areas calculated in the step of calculating the total image areas; comparing the first dividing number of the specific image area with the second dividing number of the specific image area selected in the selecting step, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

(21) The method of item 20, further comprising the step of: designating a duplication width of the divided images; wherein the total image areas, each of which correspond to each of the first dividing numbers and each of the second dividing numbers, are calculated according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where, S: Total image area corresponding to First dividing number,

V: First longitudinal length,
M: First dividing number in longitudinal direction,
T: Duplication width designated by the duplication-width designating section,
H: First lateral length,
N: First dividing number in lateral direction,
S': Total image area corresponding to Second dividing number,
M': Second dividing number in longitudinal direction,
N': Second dividing number in lateral direction.

(22) The method of item 20, wherein, when plural kinds of image areas correspond to a specific total image area for which a difference between the specific total image area and a size of the large-sized image is minimum among the total image areas calculated in the step of calculating the total image areas, an image area, a size of which is minimum among the plural kinds of image areas, is selected as the specific image area.

(23) The method of item 17, wherein a plurality of small-sized images are laid out on the large-sized image, and the large-sized image includes image areas, on which the plurality of small-sized images are laid out, and margin areas in which register marks, serving as working indicators for cutting, binding and/or multicolor printing operations, and punching holes are formed.

(24) The method of item 17, wherein the image outputting apparatus is a color laser printer that outputs the divided images as printed color samples for conducting a proofreading operation.

(25) A computer program for executing an operation for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, the computer program comprising the functional steps of: storing in advance a first longitudinal length and a first lateral length of an image area recordable for the image outputting apparatus corresponding to a size of a recording medium to be employed; storing the bulk image data of the large-sized image received from the external apparatus; finding a second longitudinal length and a second lateral length of the large-sized image based on the image data stored in the step of storing the bulk image data; calculating a first dividing number, based on a ratio between the first longitudinal length and the second longitudinal length and another ratio between the first lateral length and the second lateral length, and at a same time, calculating a second dividing number, based on a ratio between the first longitudinal length and the second lateral length and another ratio between the first lateral length and the second longitudinal length; comparing the first dividing number with the second dividing number, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

(26) A computer program for executing an operation for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, the computer program comprising the functional steps of: storing in advance first longitudinal lengths and first lateral lengths of an image areas recordable for the image outputting apparatus corresponding to sizes of plural kinds of recording mediums to be employed; storing the bulk image data of the large-sized image received from the external apparatus; finding a second longitudinal length and a second lateral length of the large-sized image based on the image data stored in the step of storing the bulk image data; calculating first dividing numbers, based on ratios between the first longitudinal lengths and the second longitudinal length and other ratios between the first lateral lengths and the second lateral length, and at a same time, calculating second dividing numbers, based on ratios between the first longitudinal lengths and the second lateral length and other ratios between the first lateral lengths and the second longitudinal length; selecting a specific image area, which corresponds to a minimum first dividing number or a minimum second dividing number among the first dividing numbers and the second dividing numbers, out of the image areas; comparing the first dividing number of the specific image area with the second dividing number of the specific image area selected in the selecting step, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

(27) The computer program of item 26, wherein, when plural kinds of image areas correspond to the minimum first dividing number or the minimum second dividing number, the selecting section selects an image area, a size of which is minimum among the plural kinds of image areas, as the specific image area.

(28) A computer program for executing an operation for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, the computer program comprising the functional steps of: storing in advance first longitudinal lengths and first lateral lengths of an image areas recordable for the image outputting apparatus corresponding to sizes of plural kinds of recording mediums to be employed; storing the bulk image data of the large-sized image received from the external apparatus; finding a second longitudinal length and a second lateral length of the large-sized image based on the image data stored in the step of storing the bulk image data; calculating first dividing numbers, based on ratios between the first longitudinal lengths and the second longitudinal length and other ratios between the first lateral lengths and the second lateral length, and at a same time, calculating second dividing numbers, based on ratios between the first longitudinal lengths and the second lateral length and other ratios between the first lateral lengths and the second longitudinal length; calculating total image areas, based on the first dividing numbers, the second dividing numbers and sizes of the image areas; selecting a specific image area, corresponding to a specific total image area for which a difference between the specific total image area and a size of the large-sized image is minimum among the total image areas calculated in the step of calculating the total image areas; comparing the first dividing number of the specific image area with the second dividing number of the specific image area selected in the selecting step, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

(29) The computer program of item 28, further comprising the functional step of: designating a duplication width of the divided images; wherein the total image areas, each of which correspond to each of the first dividing numbers and each of the second dividing numbers, are calculated according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where, S: Total image area corresponding to First dividing number,

V:      First longitudinal length,
M:      First dividing number in longitudinal direction,
T:      Duplication width designated by the duplication-width designating section,
H:      First lateral length,
N:      First dividing number in lateral direction,
S':     Total image area corresponding to Second dividing number,
M':     Second dividing number in longitudinal direction,
N':     Second dividing number in lateral direction.

(30) The computer program of item 28, wherein, when plural kinds of image areas correspond to a specific total image area for which a difference between the specific total image area and a size of the large-sized image is minimum among the total image areas calculated in the step of calculating the total image areas, an image area, a size of which is minimum among the plural kinds of image areas, is selected as the specific image area.

(31) The computer program of item 25, wherein a plurality of small-sized images are laid out on the large-sized image, and the large-sized image includes image areas, on which the plurality of small-sized images are laid out, and margin areas in which register marks, serving as working indicators for cutting, binding and/or multicolor printing operations, and punching holes are formed.

(32) The computer program of item 25, wherein the image outputting apparatus is a color laser printer that outputs the divided images as printed color samples for conducting a proofreading operation.

(33) A storage medium that retains a computer program for executing an operation for dividing a bulk image data of a large-sized image, received from an external apparatus, into a plurality of image data sets, each of which represents each of divided images included in the large-sized image, so as to transmit the plurality of image data sets to an image outputting apparatus that outputs the divided images based on the plurality of image data sets, wherein the computer program comprises the functional steps of: storing in advance a first longitudinal length and a first lateral length of an image area recordable for the image outputting apparatus corresponding to a size of a recording medium to be employed; storing the bulk image data of the large-sized image received from the external apparatus; finding a second longitudinal length and a second lateral length of the large-sized image based on the image data stored in the step of storing the bulk image data; calculating a first dividing number, based on a ratio between the first longitudinal length and the second longitudinal length and another ratio between the first lateral length and the second lateral length, and at a same time, calculating a second dividing number, based on a ratio between the first longitudinal length and the second lateral length and another ratio between the first lateral length and the second longitudinal length; comparing the first dividing number with the second dividing number, so as to determine either the first dividing number or the second dividing number as a selected dividing number that is equal to or smaller than the other; and dividing the bulk image data, stored in the step of storing the bulk image data, into the plurality of image data sets by employing the selected dividing number and a dividing pattern corresponding to the selected dividing number, so as to transmit the plurality of image data sets to the image outputting apparatus.

With the image outputting system, the controlling apparatus, the image dividing method, the program to execute the method, and the storage medium having the program, according to the invention, even in the case of dividing and outputting image data of a large sized image which is too large to be recorded in the allowed image output region of a recording medium on which to output the image data, a proper direction of image output and a proper size of recording medium are selected so that the number of recording media on which to dividing-output the image and the blank region in which image is not recorded are minimized. By thus performing dividing-output of the image, the printing cost can be greatly reduced.

Further, with the image outputting system, the controlling apparatus, the image dividing method, the program to execute the method, and the storage medium having the program, according to the invention, it is allowed to fully utilize a color laser printer capable of high speed output at inexpensive device cost and running cost as means for creating DCPs, which enables great reduction in device cost.

Still further, with the image outputting system, the controlling apparatus, the image dividing method, the program to execute the method, and the storage medium having the program, according to the invention, in the case where image data to be output is image data to be output by a CTP, it is possible to dividing-output only the part of image data region having been made by imposing a subset of image data excluding margins (register mark regions and punch regions for a CTP Plate) which are not primarily necessary to be output. Thus, waste of recording media is avoided, which greatly reduces printing cost.

Yet further, with the image outputting system, the controlling apparatus, the image dividing method, the program to execute the method, and the storage medium having the program, according to the invention, the above dividing-output can be achieved by software on a general purpose computer, and thus, the above mentioned effects can be obtained without increase in device cost.

## BRIEF DESCRIPTION OF THE DRAWINGS

Other objects and advantages of the present invention will become apparent upon reading the following detailed description and upon reference to the drawings in which:

Fig. 1 is a diagram showing the entire configuration of an image outputting system in an embodiment according to the present invention;
Fig. 2 is a flowchart showing the flow of a series of printing plate making jobs performed by the image outputting system shown in Fig. 1;
Fig. 3 is a function block diagram showing a detailed configuration of a controlling apparatus shown in Fig.1;
Fig. 4 is a flowchart showing a series of dividing-output process of image data performed by the controlling apparatus shown in Fig. 3;

Fig. 5 is a diagram explaining a process of computing the total area of allowed image output regions by a dividing-number/total-area computing section of the controlling apparatus shown in Fig. 3;

Fig. 6 is a diagram showing an example of a structure of image data output by CTP; and

Fig. 7 is a diagram explaining a dividing-output process of image data performed by a conventional image processing apparatus.

## DETAILED DESCRIPTION OF THE PREFERRED EMBODIMENT

An image outputting system, a controlling apparatus, an image dividing method, a program to execute the method, and a storage medium having the program in an embodiment according to the invention will now be described in detail referring to the drawings.

[Image Outputting System]

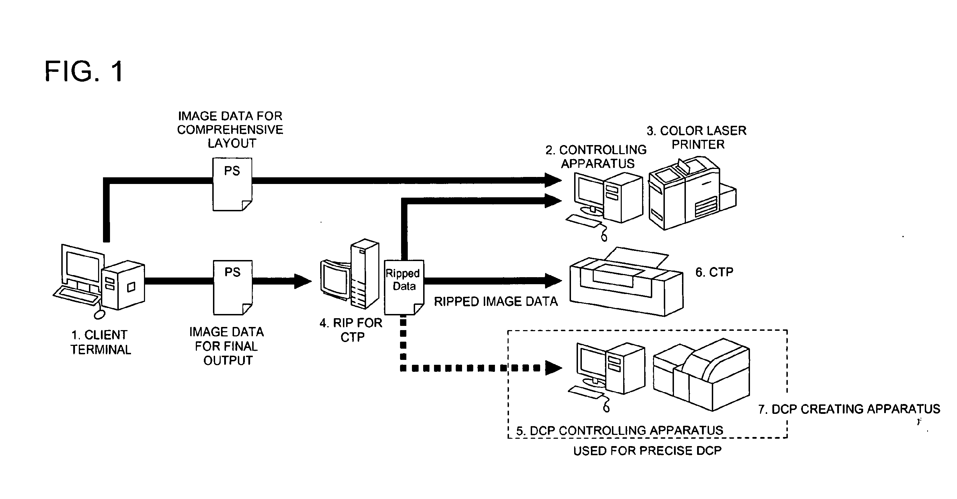

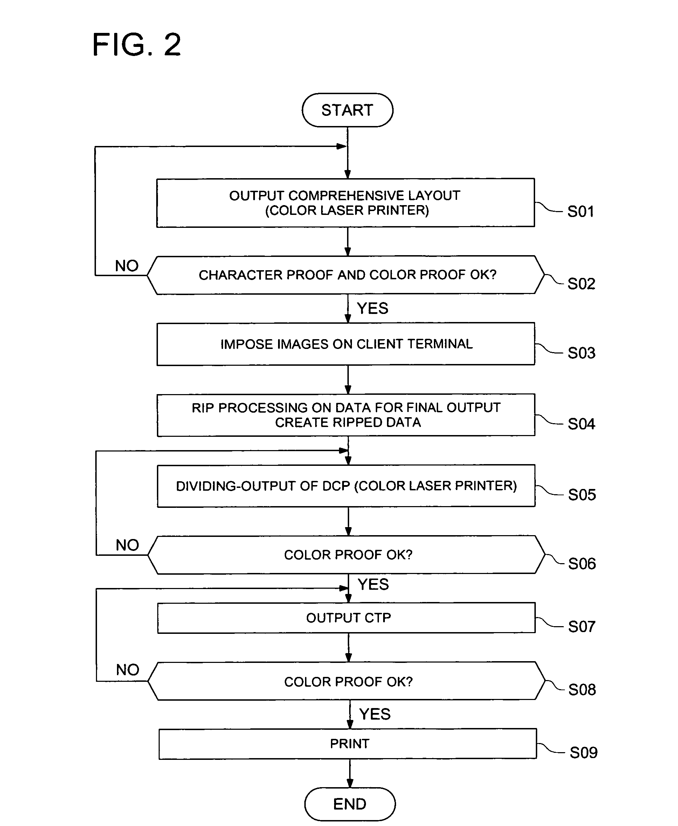

First, the system configuration and an outline of the operation of the image outputting system in the present embodiment will be explained, referring to Fig. 1 and along the flow in the flowchart shown in Fig. 2.

(System Configuration)

As shown in Fig. 1, the image outputting system is comprised of: client terminal 1 for image editing of image data and imposing a subset of image data; controlling apparatus 2 that transmits image data (image data of a single page before imposing pages) for a comprehensive layout described in PostScript, for example, to color laser printer 3 described later; a color laser printer 3, the printer being of a charging copy method, that outputs an image based on the image data for the comprehensive layout having been transmitted from the controlling apparatus 2, and divides and outputs an image based on image data (image data made by imposing a plurality of image data for a comprehensive layout) for final output transmitted from later described RIP 4 for CTP; RIP 4, for CTP, that performs RIP processing (converting the final image data into bitmap data to fit the output resolution of CTP 6 or DCP creating apparatus 7) on image data for final output described in Post-Script, for example, the image data for final output having been transmitted from the client terminal 1, and then transmits the bitmap data to the controlling apparatus 2, CTP6, or DCP controlling apparatus 5 if a precise DCP is necessary; the DCP creating apparatus 7 that outputs an image, as a DCP, based on the image data, for final output, having been transmitted from the RIP 4 for CTP via the DCP controlling apparatus 5; and the CTP 6 that outputs an image base on the image data, for final output, having been transmitted from the RIP 4 for CTP. These are respectively connected via a network.

Each of the client terminal 1, the controlling apparatus 2, the RIP 4 for CTP, and the DCP controlling apparatus 5, operates as a computer terminal, comprises a computer itself, a key board, a display section, and others, and incorporates a certain operational program. The client terminal 1 further comprises an image input device, such as an image scanner, that is necessary for obtaining image data.

(Outline of Operation)

As shown in Fig. 2, in this configuration, image data edited with the client terminal 1 is transmitted to the controlling apparatus 2, then the controlling apparatus 2 having received the image data controls output by the color laser printer 3, and thus the color laser printer 3 outputs a color comprehensive layout (S01). The "color comprehensive layout" described here is a colored finishing sample. Thus, a finished image near to a final printing is produced to be shown as a dummy of a photograph or illustration of imposed pages, for discussion as to whether the design is suitable for planning and editing intention, or for obtaining acceptance of the design from the client. In this situation, individual single pages are output in a small size, and the results of character proof and color proof are confirmed (S02).

If it is confirmed by a worker that there is no problem (S02, Yes), image-imposing by the client terminal 1 is performed (S03). The above description "image-imposing" means a work of pasting images such as photographs or illustrations in a unit of 16 pages, 8 pages, or 4 pages, the images being fitted to the size of sheets to be loaded to a printing apparatus, such that numbers (numbers at the edge of a page to indicate the page number) are in order when a plate making film has been finally printed and set into signature.

Next, the client terminal 1 transmits image data for final output, the image data having been subjected to image-imposing, to the RIP 4 for CTP, and then, the RIP 4 for CTP, having received the image data for final output, performs RIP processing on the image data for final output. Specifically, the image data for final output is converted into bitmap data fitted to the output resolution of the DCP creating apparatus 7 or the CTP 6, and thus image data having been subjected to RIP processing is created (S04). This RIPped image data is transmitted from the RIP 4 for CTP to the controlling apparatus 2, then the controlling apparatus 2, having received the RIPped image data, controls output of the color laser printer 3, and the color laser printer 3 divides and outputs the image based on the image data for final output (S05). The worker finally creates a DCP by pasting outputs having been made as mentioned above. Incidentally, in the case where a precise DCP is necessary, the RIPped image data is transmitted to the DCP controlling apparatus 5, then the DCP controlling apparatus 5, having received the RIPped image data, controls output of the DCP creating apparatus 7, and the DCP creating apparatus 7 outputs an image based on the image data for final output (S05). In this case, an imposed image is output as a DCP.

Next, color proofing of the DCP is performed, and if it is confirmed by the worker that there is no problem (S06, Yes), then RIPped data (the same data as the data used for output of the above DCP) is transmitted from the RIP 4 for CTP to the CTP 6, and an image is directly recorded on a printing plate by the CTP 6 (S07). Printing is performed with the printing plate, and thereafter color proofing is performed on the resulted printing, which is an imposed image. Then, if it is confirmed by the worker that there is no problem (S08, Yes), then the process is proceeded to final printing with a printing machine (S09).

[Controlling Apparatus]

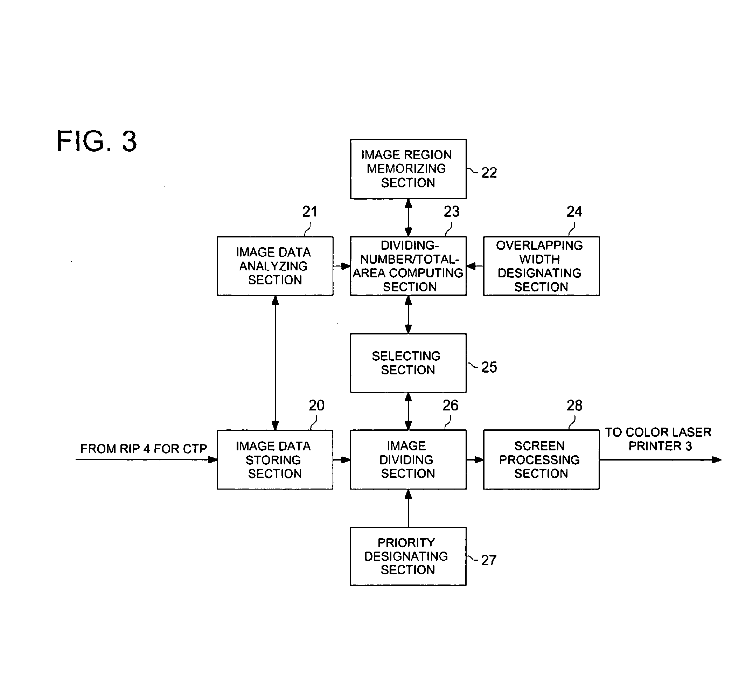

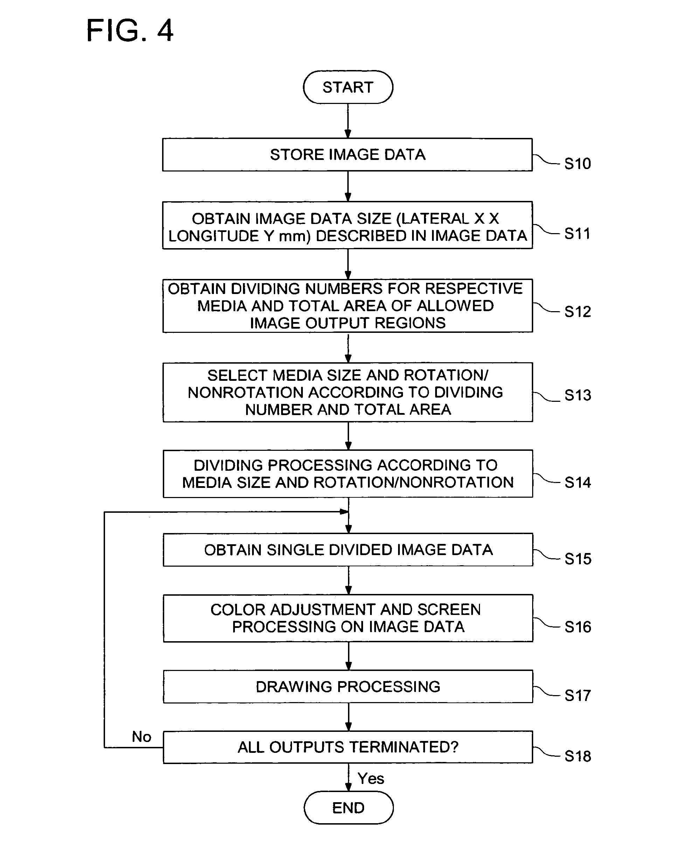

Next, detail configuration and an outline of the operation of the controlling apparatus 2 that is a part of the image outputting system will be explained, referring to Figs. 3 to 5 and along the flow in the flowchart shown in Fig. 4. In the following, description will be given on dividing output processing on an imposed image data, which is a characteristic of the invention and performed by the controlling apparatus 2.

(Detail Configuration)

As shown in Fig. 3, the controlling apparatus 2 comprises: image region memorizing section 22 for memorizing, in advance, the respective pairs of the longitudinal length and the lateral length of allowed image output regions (in other words, effective image regions) of output by the color laser printer 3, based on the sizes (the longitudinal length and the lateral length) of a plural types of recording media; image data storing section 20 for storing the image data received from the RIP 4 for CTP; image data analyzing section 21 for obtaining the image size (longitudinal and lateral lengths) of an image based on the image data stored in the image data storing section 20, with analysis of information described in the image data; and overlapping width designating section 24 for properly designating of an overlapping width between neighboring images of a group of images that are dividedly output by the color laser printer 3 on recording media (more specifically, in the allowed image output region of recording media) of a respective size.

Further, the controlling apparatus 2 comprises dividing-number/total-area computing section 23 that computes a dividing number and a total area, which will be described below in detail. (1) From the longitudinal length and the lateral length of the image analyzed by the image data analyzing section 21, and from the longitudinal length and the lateral length of the respective allowed image output region (corresponding to the size of the respective type of media) memorized in the image region memorizing section 22, a ratio between the respective longitudinal lengths (the value of the longitudinal length as a result of analysis by the image data analyzing section 21, divided by the longitudinal length of the allowed image data output region memorized in the image region memorizing section 22), and a ratio between the respective lateral lengths (the value of the lateral length as a result of analysis by the image data analyzing section 21, divided by the lateral length of the allowed image data output region memorized in the image region memorizing section 22), are computed. Then, from the ratio between the respective longitudinal lengths, and from the ratio between the respective lateral lengths, a first dividing number (a value of multiplication between the two values described above), that is, the dividing number of the entire image for the case of performing normal image output is computed. (2) On the other hand, a second dividing number based on the ratio of one's longitudinal length to the other's lateral length, and based on the ratio of the one's lateral length to the other's longitudinal length, that is, a dividing number of the entire image for the case of outputting an image with rotation by 90 degrees is computed. (3) Then, based on the computed first dividing number and second dividing number in the respective allowed image output region, and based on the size (the longitudinal length and the lateral length) of the allowed image output region, the total areas of the allowed image output region, in other words, the total areas of images which are output in divided portions on individual recording media by the color laser printer 3, are computed, correspondingly to the first dividing number and the second dividing number, wherein respective proper sized regions are excluded from the total areas, taking into account the respective overlapping widths designated by the overlapping width designating section 24.

Further, the controlling apparatus 2 comprises priority designating section 27, selecting section 25, and image dividing section 26. When the image data stored in the image data storing section 20 is divided by the image dividing section 26 for respective recording media, the designating section 27 designates which category of dividing numbers and total areas, having been computed by the dividing-number/total-area computing section 23, is to be given priority for dividing. (That is, the designating section 27 designates which category of numbers of sheets of recording media onto which the image is output in divided portions, and margins (regions where no image is recorded) of recording media onto which the images is output in divided portions, is to be minimized.) The selecting section 25 selects, from the respective allowed image output regions, an allowed image output region that corresponds to a dividing number which minimizes the value of the dividing number of the respective allowed image output regions computed by the dividing-number/total-area computing section 23. The selecting section 25 also selects, from the respective allowed image output regions, an allowed image output region that corresponds to a total area which minimizes the differences between the total area having been computed by the dividing-number/total-area computing section 23 and the size of an image having been analyzed by the image data analyzing section 21. The image dividing section 26 includes a comparing section, not shown, that compares the first dividing number and the second dividing number of the allowed image output region selected by the selecting section 25. If the category of dividing numbers has been designated by the priority designating section 27, an allowed image output region which includes the minimum dividing number is selected from the respective allowed image output regions. As a result of comparison by the comparing section, if either of the dividing numbers is smaller than the other, the smaller dividing number is applied, and if the dividing numbers are equal, either dividing number is applied, for dividing an image as described below. An image, which is based on the image data stored in the image data storing section 20, is divided into a plurality (that is, the dividing number) of regions in the size of the related allowed image output region, wherein the image is divided with the same correspondence as that of the longitude and the lateral that constitute the ratio having been applied to the computation of the aforesaid dividing number. In the case where the category of total areas has been designated by the priority designating section 27, the allowed image output region, which includes the total area which minimizes the difference described above, is selected from the respective allowed image output regions. As a result of comparison of the first dividing number and the second dividing number by the comparing section, if either is smaller, the smaller dividing number is applied, and if they are equal, either related dividing number is applied, for dividing an image as described below. An image, which is based on the image data stored in the image data storing section 20, is divided into a plurality (that is, the dividing number) of regions in the size of the related allowed image output region, wherein the image is divided with the same correspondence as that of the longitude and the lateral that constitute the ratio having been applied to the computation of the aforesaid dividing number.

To divide the image with the same correspondence as that of the longitude and the lateral constituting the ratio having been applied to the computation of the aforesaid dividing number is, either to respectively divide the lengths of the longitude and the lateral of the image based on the image data stored in the image data storing section 20 by the respective lengths of the longitude and the lateral of the allowed image output region, wherein the image based on the image data stored in the image data storing section 20 is divided in such a manner, or, to respectively divide the lengths of the longitude and the lateral of the image based on the image data stored in the image data storing section 20 by the respective lengths of the longitude and the lateral reversed from the respective lengths of the longitude and the lateral of the allowed image output region, wherein the image based on the image data stored in the image data storing section 20 is divided in such a manner. That is, for example, assuming that the respective lengths of the longitudinal and the lateral of the allowed image output region are fixed, the image based on the image data stored in the image data storing section 20 is output, either being divided by the longitudinal length and the lateral length of the allowed image output region without reversing the lengths, or being divided by the longitudinal length and the lateral length of the allowed image output region in the state that the image based on the image data stored in the image data storing section 20 is rotated by 90 degrees.

Further, the controlling apparatus 2 comprises screen processing section 28 by which the image data output from the image dividing section 26 is sequentially subjected to color adjustment and screen processing (converting original image such as a photograph and illustration having gradation into a set of points (screen dots, halftone dote, or the like), thus processing the original image to be used for printing), and is transmitted to the color laser printer 3.

(Detail Operation)

With this configuration, the worker, at the priority designating section 27 thorough GUI (Graphical User Interface) displayed on the display section of the controlling apparatus 2, first designates which category of dividing numbers and total areas is to be given priority in dividing, by the image dividing section 26, the image data stored in the image data storing section 20 onto individual recording media. Thereafter, as shown in Fig. 4, image data (RIPped and imposed image data) for final output is input from the RIP 4 for CTP. When this image data is stored (image data storing step; S10) in the image data storing section 20, the image data analyzing section 21 obtains the image size of the image data stored in the image data storing section 20 by analyzing information described in the image data (image data analyzing step; S11). In this way, image size (longitude Y [mm] x lateral X [mm]) and imposition information (respective numbers of image data imposed longitudinally and laterally in the image data) of the image data are obtained. In the case where the image data is image data which is output by CTP, the image data analyzing section 21 obtains the size of an image data region that is imposed excluding margins (register mark regions and punch regions for a CTP Plate) which are primarily unnecessary to be output. That is, in this case, the size of an imposed image data region excluding margins is to be described in the image data.

The display section of the controlling apparatus 2 displays the above imposition information via GUI (Graphical User Interface) . By referring to the imposition information displayed on the display section, the worker, via the overlapping width designating section 24, properly designates an overlapping width between neighboring images when performing dividing-outputting of the image data based on the image data stored in the image data storing section 20, using recording media of a respective size. Concretely, for example, a range of, one image, that includes another image neighboring the one image is designated as the overlapping width of recording media of a respective size (an overlapping width designating step). Thus, even in the case where dividing is performed in image regions of imposed images, by trimming unnecessary portions at the time of pasting outputs having been dividedly output, specifically, by trimming portions, of images, at which dividing has been performed, pasting is performed in margin regions, which makes a created DCP well visible. Incidentally, in this situation, the overlapping width (longitude T [mm] and lateral T [mm]) between images is obtained, wherein the overlapping is formed between images neighboring each other when an image based on the image data stored in the image data storing section 20 is output in divided portions onto the respective recording media.

Then, the dividing-number/total-area computing section 23 computes (dividing-number computing step, S12) the number of sheets (number of dividing), of recording media that are required for dividing-outputting of an image of an image size, on recording media (specifically, on the allowed image output regions of the recording media) of the respective size, wherein the image size is analyzed by the image data analyzing section 21, the analysis having been made based on the size of the allowed image output region (for example, longitudinal V [mm] x lateral H [mm]) for each allowed image output region, of the color laser printer 3, which accords to a respective size of recording media memorized in advance (image region memorizing step) in the image region storing memorizing section 22. The dividing-number/total-area computing section 23 also computes the total area of the allowed image output regions (total area computing step, S12) of this time. In this way, the dividing number (longitude M and lateral N, that is, M x N in total) for dividing-outputting an image of the image size analyzed by the image data analyzing section 21, on recording media of the respective size, and the total area of the allowed image output region of this time, are obtained.

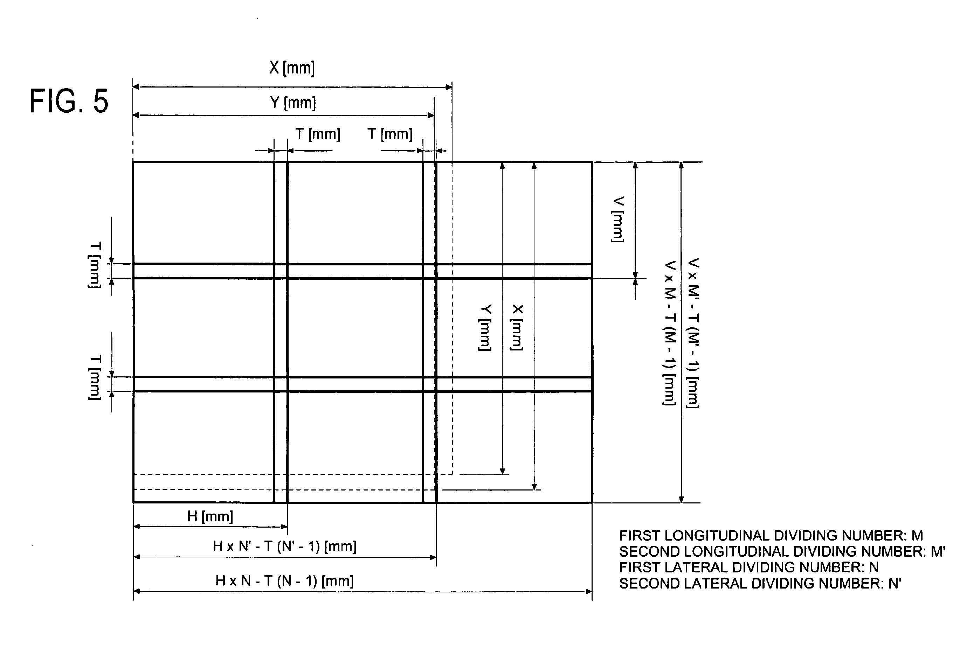

In more detail, corresponding to recording media of a respective size, for example as shown in Fig. 5, the dividing-number/total-area computing section 23 computes the longitudinal and lateral numbers of recording media (longitude M = int (Y/V) + 1 [sheet], lateral N = int (X/H) + 1 [sheet]; int (z) is integer part of (z)) by dividing the respective lengths of the longitude and lateral of the image size (lengths shown in the figure by dashed lines; longitude Y [mm], lateral X [mm]), having been analyzed by the image data analyzing section 21, by the respective lengths (lengths shown in the figure by solid lines; longitude V [mm], lateral H [mm]) of the longitude and lateral of the allowed image output regions. In this situation, the total required number of sheets of recording media, namely, M x N is defined as a first dividing number. Further, the dividing-number/total-area computing section 23 computes the longitudinal and lateral numbers of recording media (longitude M' = int (Y/H) + 1 [sheet], lateral N' = int (X/V) + 1 [sheet]; int (z) is integer part of (z)) required in the case of rotating the image by 90 degrees with the direction of recording media unchanged, by dividing the respective lengths of the longitude and lateral of the image size (longitude Y [mm], lateral X [mm]), having been analyzed by the image data analyzing section 21, by respective lengths (longitude H [mm], lateral V [mm]) reversed from the respective lengths of the longitude and lateral of the allowed image output regions (however, in Fig. 5, respective lengths (lengths shown in the figure by dashed lines; longitude X [mm], lateral Y [mm]) reversed from the longitudinal and lateral lengths of the image size are divided by the longitudinal and lateral lengths (longitudinal V [mm], lateral H [mm]) of the allowed image output region). In this situation, the total required number of recording media, namely, M' x N' is defined as a second dividing number.

Incidentally, in the case shown in Fig. 5, the first dividing number is "9", and the second dividing number is "6". In this case, if dividing-output of the image is performed with the second dividing number (outputting the image by rotating the image by 90 degrees dividing 6 times, with the direction of recording media unchanged), a smaller number of recording media is required, and also margin regions are reduced.

Further, corresponding to recording media of a specific size, the dividing-number/total-area computing section 23 computes the total area of the allowed image output regions in the following manner. The dividing-number/total-area computing section 23 subtracts multiplication between the longitudinal overlapping width (T [mm]) designated by the overlapping width designating section 24, and the longitudinal dividing number (M) subtracted by one, from the value of multiplication between the longitudinal length (V [mm]) of allowed image output regions and the longitudinal dividing number (M), and also subtracts multiplication between the lateral overlapping width (T [mm]) designated by the overlapping width designating section 24, and the lateral dividing number (N) subtracted by one, from the value of multiplication between the lateral length (H [mm]) of allowed image output regions and the lateral dividing number (N), and then multiplies the resulting values. That is, the dividing-number/total-area computing section 23 computes, by the following expressions, the respective total areas of the allowed image output regions, wherein the respective total areas correspond to the first dividing number and the second dividing number.

(Expression 1)

Total area [mm$^2$], corresponding to the first dividing number, of an allowed image output region

$$= \{V \times M - T(M-1)\} \times \{H \times N - T(N-1)\}$$

(Expression 2)

Total area [mm$^2$], corresponding to the second dividing number, of an allowed image output region

$$= \{V \times M' - T(M'-1)\} \times \{H \times N' - T(N'-1)\}$$

Then, the selecting section 25 selects an allowed image output region, from the respective allowed image output regions, that corresponds to the dividing number which is the minimum of the first dividing number and the second dividing number (for example, in the case of Fig. 5, the first dividing number is "9", while the second dividing number is "6", therefore, the second dividing number is smaller) related to the respective allowed image output regions, the respective dividing numbers having been computed by the dividing-number/total-area computing section 23. The selecting section 25 also selects, from the respective allowed image output regions, the allowed image output region having been applied for the total area (For example, in the case of Fig. 5, the total area corresponding to the second dividing number is smaller than the total area corresponding to the first dividing number.) that is the minimum of the difference between the total area corresponding to the first dividing number, which have been computed by the dividing-number/total-area computing section 23, and the size (region) of the image, which have been analyzed by the image data analyzing section 21, and the difference between the total area corresponding to the second dividing number, which have been computed by the dividing-number/total-area computing section 23, and the size (region) of the image, which have been analyzed by the image data analyzing section 21. If there are a plurality of allowed image output regions that include the minimum dividing number, or if there are a plurality of allowed image output regions that include the total area minimizing the difference described above, then what minimizes the size of the image region is selected from them.

Next, the operation in the case where the category of dividing numbers has been designated by the priority designating section 27 will be described below. The comparison section, not shown, of the image dividing section 26 compares the values of the first dividing number and the second dividing number that correspond to the allowed image output region, wherein the allowed image output region includes the dividing number that minimizes the value of dividing numbers selected by the selecting section 25 (S13). The image dividing section 26 divides an image data based on the image data stored in the image data storing section 20 into a plural number (namely, the dividing number) of regions in the allowed image output region, applying a smaller dividing number if either of the dividing numbers is smaller, or applying either dividing number if the dividing numbers are equal, wherein the dividing is performed with the same correspondence as that of the longitude and the lateral that constitute the ratio related to the computation of the aforesaid dividing number (S14).

The operation in the case where the category of total areas has been designated by the priority designating section 27 will be described below. The comparison section, not shown, of the image dividing section 26 compares the values of the first dividing number and the second dividing number that correspond to the allowed image output region, the allowed image output region including the total area that minimizes the difference and is selected by the selecting section 25 (S13). The image dividing section 26 divides an image data based on the image data stored in the image data storing section 20 into a plural number (namely, the dividing number) of regions in the allowed image output region, applying a smaller dividing number if either of the dividing numbers is smaller, or applying either dividing number if the dividing numbers are equal, wherein the dividing is performed with the same correspondence as that of the longitude and the lateral that constitute the ratio related to the computation of the aforesaid dividing number (S14).

In this situation, the image dividing section 26 outputs a plurality of image data having been divided as well as instruction signals, to the screen processing section 28, that instruct whether the image based on the plurality of image data is to be output as it is or in a state the image is rotated by 90 degrees, and instruct which size of recording media is to be employed to out put the image.

With the instructions, the color laser printer 3, described later in detail, can perform dividing-outputting of the image in a proper output direction, and on recording media of a proper size, making it possible to reduce the number of sheets of recording media, as much as possible, on which to output the image, and to reduce a region, as much as possible, where no image is output (recorded).

If the image data is image data to be output by CTP, the image dividing section 26 divides the region of image data having been imposed excluding margins (register mark regions and punch regions for a CTP Plate) which are primarily unnecessary to be output. If either the first dividing number or the second dividing number having been computed by the dividing-number/ total-area computing section 23 is 1, the image dividing section 27, of course, performs ordinary processing instead of such dividing processing.

The screen processing section 28 sequentially performs color adjustment and screen processing (S15) on image data which is output from the image dividing section 26, that is, the image data having been subjected to dividing processing, and transmits the image data together with the above signals to the color laser printer 3 (S16).

The laser printer 3 having received the transmission sequentially outputs each image data based on the transmitted image data in the instructed direction and on a recording medium of the instructed size (S17). The processes from S15 to S17 are repeated for the number of times of the dividing number, and when all the image data subjected to dividing processing have been output onto recording media (S18, Yes), image outputting processing by the image outputting system is terminated.

The worker pastes these outputs, and thus finally creates a DCP, wherein the outputs are to be pasted at the portions of margin after unnecessary portions of each recording medium are trimmed, as described above.

As has been described, with the image outputting system of the present embodiment, when image data, which is of a size too large to be recorded on a recording medium and has been imposed, is dividing-output by the color laser printer 3, the dividing-output is performed by the selecting section 25 and the image dividing section 26 of the controlling apparatus 2 such that a proper output direction of the image and a proper size of recording media are selected, thereby reducing the number of sheets of recording media on which to output the image as much as possible, and also reducing, as much as possible, margin regions of recording media, where no image is recorded. Thus, waste of recording media is avoided, and printing cost is greatly reduced.

[Program and Storage Medium for Storing the Same]

The processing performed by the controlling apparatus 2, which is a component of the image outputting system, or more specifically, a program to execute the processing in steps S10 to S16 in the flowchart shown in Fig. 4 is stored in a storage medium incorporated in or connected to the controlling apparatus 2, and read and executed by a computing section also incorporated in the controlling apparatus 2.

The above storage medium can be, for example, a semiconductor memory such as a ROM, RAM, flash memory, etc., a memory device such as an integrated circuit, an optical disk, a magneto-optic disk (a CD-ROM, DVD-RAM, DVD-ROM, MO, etc.), a magnetic storage medium (a magnetic disk such as a hard disk, floppy (trademark) disk, or ZIP).

The image outputting system, the controlling apparatus, the image dividing method, the program to execute the method, and the storage medium storing the program, in the present embodiment having been described above, are examples in a preferable embodiment of the invention, which do not exclude other embodiments.

For example, although in the present embodiment, an overlapping width is obtained in such a manner that the worker designates an overlapping width corresponding to recording media of a respective size via the overlapping width designating section 24, the overlapping width may be set in advance to a predetermined value as a default.

Further, although in the present embodiment, the worker designates which category of dividing numbers and total areas is to be given priority via the priority designating section 27, information as to which is given priority may be set in advance as a default.

Further, although in the present embodiment, the worker designates which of the categories of dividing numbers and total areas is to be given priority via the priority designating section 27, it is possible, for example, to separate the choices to implement dividing-output with reference to dividing numbers only (in this case, it is not necessary to compute total areas to compare them), or with reference to total areas only (in this case, it is not necessary to compare dividing numbers).

Still further, in the present embodiment, as a large sized image that is too large to be recorded on a recording medium and is, therefore, dividing-output by the color laser printer 3, an image based on image data for final output transmitted from the RIP 4 for CTP, namely, an image by imposition of a plurality of images for a comprehensive layout has been described as an example. However, the large sized image may be a single large image.

Disclosed embodiment can be varied by a skilled person without departing from the spirit and scope of the invention.

**Claims**

**1.** An image outputting system, comprising:

a controlling apparatus that receives a bulk image data of a large-sized image from an external apparatus and divides said bulk image data into a plurality of image data sets, each of which represents each of divided images included in said large-sized image, so as to transmit said plurality of image data sets; and an image outputting apparatus that receives said plurality of image data sets divided by said controlling apparatus and outputs said divided images based on said plurality of image data sets;

wherein said controlling apparatus includes:

an image-area storing section to store in advance a first longitudinal length and a first lateral length of an image area recordable for said image outputting apparatus corresponding to a size of a recording medium to be employed;

an image-data storing section to store said bulk image data of said large-sized image received from said external apparatus;

an image-size finding section to find a second longitudinal length and a second lateral length of said large-sized image based on said image data stored in said image-data storing section;

a dividing-number calculating section to calculate a first dividing number, based on a ratio between said first longitudinal length and said second longitudinal length and another ratio between said first lateral length and said second lateral length, and at a same time, to calculate a second dividing number, based on a ratio between said first longitudinal length and said second lateral length and another ratio between said first lateral length and said second longitudinal length;

a comparing section to compare said first dividing number with said second dividing number, so as to determine either said first dividing number or said second dividing number as a selected dividing number that is equal to or smaller than the other; and

an image dividing section to divide said bulk image data, stored in said image-data storing section, into said plurality of image data sets by employing said selected dividing number and a dividing pattern corresponding to said selected dividing number, so as to transmit said plurality of image data sets to said image outputting apparatus.

2. An image outputting system, comprising:

a controlling apparatus that receives a bulk image data of a large-sized image from an external apparatus and divides said bulk image data into a plurality of image data sets, each of which represents each of divided images included in said large-sized image, so as to transmit said plurality of image data sets; and

an image outputting apparatus that receives said plurality of image data sets divided by said controlling apparatus and outputs said divided images based on said plurality of image data sets;

wherein said controlling apparatus includes:

an image-area storing section to store in advance first longitudinal lengths and first lateral lengths of an image areas recordable for said image outputting apparatus corresponding to sizes of plural kinds of recording mediums to be employed;

an image-data storing section to store said bulk image data of said large-sized image received from said external apparatus;

an image-size finding section to find a second longitudinal length and a second lateral length of said large-sized image based on said image data stored in said image-data storing section;

a dividing-number calculating section to calculate first dividing numbers, based on ratios between said first longitudinal lengths and said second longitudinal length and other ratios between said first lateral lengths and said second lateral length, and at a same time, to calculate second dividing numbers, based on ratios between said first longitudinal lengths and said second lateral length and other ratios between said first lateral lengths and said second longitudinal length;

a selecting section to select a specific image area, which corresponds to a minimum first dividing number or a minimum second dividing number among said first dividing numbers and said second dividing numbers, out of said image areas;

a comparing section to compare said first dividing number of said specific image area with said second dividing number of said specific image area selected by said selecting section, so as to determine either said first dividing number or said second dividing number as a selected dividing number that is equal to or smaller than the other; and

an image dividing section to divide said bulk image data, stored in said image-data storing section, into said plurality of image data sets by employing said selected dividing number and a dividing pattern corresponding to said selected dividing number, so as to transmit said plurality of image data sets to said image outputting apparatus.

3. The image outputting system of claim 2, wherein, when plural kinds of image areas correspond to said minimum first dividing number or said minimum second dividing number, said selecting section selects an image area, a size of which is minimum among said plural kinds of image areas, as said specific image area.

4. An image outputting system, comprising:

a controlling apparatus that receives a bulk image data of a large-sized image from an external apparatus and divides said bulk image data into a plurality of image data sets, each of which represents each of divided images included in said large-sized image, so as to transmit said plurality of image data sets; and

an image outputting apparatus that receives said plurality of image data sets divided by said controlling apparatus and outputs said divided images based on said plurality of image data sets;

wherein said controlling apparatus includes:

an image-area storing section to store in advance first longitudinal lengths and first lateral lengths of an image areas recordable for said image outputting apparatus corresponding to sizes of plural kinds of recording mediums to be employed;

an image-data storing section to store said bulk image data of said large-sized image received from said external apparatus;

an image-size finding section to find a second longitudinal length and a second lateral length of said large-sized image based on said image data stored in said image-data storing section;

a dividing-number calculating section to calculate first dividing numbers, based on ratios between said first longitudinal lengths and said second longitudinal length and other ratios between said first lateral lengths and said second lateral length, and at a same time, to calculate second dividing numbers, based on ratios between said first longitudinal lengths and said second lateral length and other ratios between said first lateral lengths and said second longitudinal length;

a total-area calculating section to calculate total image areas, based on said first dividing numbers, said second dividing numbers and sizes of said image areas;

a selecting section to select a specific image area, corresponding to a specific total image area for which a difference between said specific total image area and a size of said large-sized image is minimum among said total image areas calculated by said total-area calculating section;

a comparing section to compare said first dividing number of said specific image area with said second dividing number of said specific image area selected by said selecting section, so as to determine either said first dividing number or said second dividing number as a selected dividing number that is equal to or smaller than the other; and

an image dividing section to divide said bulk image data, stored in said image-data storing section, into said plurality of image data sets by employing said selected dividing number and a dividing pattern corresponding to said selected dividing number, so as to transmit said plurality of image data sets to said image outputting apparatus.

5. The image outputting system of claim 4,
   wherein said controlling apparatus further includes:

   a duplication-width designating section to designate a duplication width of said divided images; and

   wherein said total-area calculating section calculates said total image areas, each of which correspond to each of said first dividing numbers and each of said second dividing numbers, according to the following equations:

   $$S = \{V \times M - T \times (M - 1)\} \times \{H \times N - T \times (N - 1)\}$$

   $$S' = \{V \times M' - T \times (M' - 1)\} \times \{H \times N' - T \times (N' - 1)\}$$

   where,

   S: Total image area corresponding to First dividing number,
   V: First longitudinal length,
   M: First dividing number in longitudinal direction,
   T: Duplication width designated by said duplication-width designating section,
   H: First lateral length,
   N: First dividing number in lateral direction,
   S': Total image area corresponding to Second dividing number,
   M': Second dividing number in longitudinal direction,
   N': Second dividing number in lateral direction.

6. The image outputting system of claim 4,
   wherein, when plural kinds of image areas correspond to a specific total image area for which a difference between said specific total image area and a size of said large-sized image is minimum among said total image areas calculated by said total-area calculating section, said selecting section selects an image area, a size of which is minimum among said plural kinds of image areas, as said specific image area.

7. The image outputting system of claim 1,
   wherein a plurality of small-sized images are laid out on said large-sized image, and said large-sized image includes image areas, on which said plurality of small-sized images are laid out, and margin areas in which register marks, serving as working indicators for cutting, binding and/or multicolor printing operations, and punching holes are formed.

8. The image outputting system of claim 1,
   wherein said image outputting apparatus is a color laser printer that outputs said divided images as printed color samples for conducting a proofreading operation.

9. A controlling apparatus that receives a bulk image data of a large-sized image from an external apparatus and divides said bulk image data into a plurality of image data sets, each of which represents each of divided images included in said large-sized image, so as to transmit said plurality of image data sets to an image outputting apparatus that outputs said divided images based on said plurality of image data sets, said controlling apparatus comprising:

   an image-area storing section to store in advance a first longitudinal length and a first lateral length of an image area recordable for said image outputting apparatus corresponding to a size of a recording medium to be employed;
   an image-data storing section to store said bulk image data of said large-sized image received from said external apparatus;
   an image-size finding section to find a second longitudinal length and a second lateral length of said large-sized image based on said image data stored in said image-data storing section;
   a dividing-number calculating section to calculate a first dividing number, based on a ratio between said first longitudinal length and said second longitudinal length and another ratio between said first lateral length and said second lateral length, and at a same time, to calculate a second dividing number, based on a ratio between said first longitudinal length and said second lateral length and another ratio between said first lateral length and said second longitudinal length;
   a comparing section to compare said first dividing number with said second dividing number, so as to determine either said first dividing number or said second dividing number as a selected dividing number that is equal to or smaller than the other; and
   an image dividing section to divide said bulk image data, stored in said image-data storing section, into said plurality of image data sets by employing said selected dividing number and a dividing pattern corresponding to said selected dividing number, so as to transmit said plurality of image data sets to said image outputting apparatus.

10. A controlling apparatus that receives a bulk image data of a large-sized image from an external apparatus and divides said bulk image data into a plurality of image data sets, each of which represents each of divided images included in said large-sized image, so as to transmit said plurality of image data sets to an image outputting apparatus that outputs said divided images based on said plurality of image data sets, said controlling apparatus comprising:

   an image-area storing section to store in advance first longitudinal lengths and first lateral lengths of an image areas recordable for said image outputting apparatus corresponding to sizes of plural kinds of recording mediums to be employed;
   an image-data storing section to store said bulk image data of said large-sized image received from said external apparatus;
   an image-size finding section to find a second longitudinal length and a second lateral length of said large-sized image based on said image data stored in said image-data storing section;
   a dividing-number calculating section to calculate first dividing numbers, based on ratios between said first longitudinal lengths and said second longitudinal length and other ratios between said first lateral lengths and said second lateral length, and at a same time, to calculate second dividing numbers, based on ratios between said first longitudinal lengths and said second lateral length and other ratios between said first lateral lengths and said second longitudinal length;
   a selecting section to select a specific image area, which corresponds to a minimum first dividing number or a minimum second dividing number among said first dividing numbers and said second dividing numbers, out of said image areas;
   a comparing section to compare said first dividing number of said specific image area with said second dividing number of said specific image area selected by said selecting section, so as to determine either said first dividing number or said second dividing number as a selected dividing number that is equal to or smaller than the other; and
   an image dividing section to divide said bulk image data, stored in said image-data storing section, into said plurality of image data sets by employing said selected dividing number and a dividing pattern corresponding to said selected dividing number, so as to transmit said plurality of image data sets to said image outputting apparatus.

11. The controlling apparatus of claim 10,
   wherein, when plural kinds of image areas correspond to said minimum first dividing number or said minimum second dividing number, said selecting section selects an image area, a size of which is minimum among said plural kinds of image areas, as said specific image area.

12. A controlling apparatus that receives a bulk image data of a large-sized image from an external apparatus and divides said bulk image data into a plurality of image data sets, each of which represents each of divided images included in said large-sized image, so as to transmit said plurality of image data sets to an image outputting apparatus that outputs said divided images based on said plurality of image data sets, said controlling apparatus comprising:

an image-area storing section to store in advance first longitudinal lengths and first lateral lengths of an image areas recordable for said image outputting apparatus corresponding to sizes of plural kinds of recording mediums to be employed;
an image-data storing section to store said bulk image data of said large-sized image received from said external apparatus;
an image-size finding section to find a second longitudinal length and a second lateral length of said large-sized image based on said image data stored in said image-data storing section;
a dividing-number calculating section to calculate first dividing numbers, based on ratios between said first longitudinal lengths and said second longitudinal length and other ratios between said first lateral lengths and said second lateral length, and at a same time, to calculate second dividing numbers, based on ratios between said first longitudinal lengths and said second lateral length and other ratios between said first lateral lengths and said second longitudinal length;
a total-area calculating section to calculate total image areas, based on said first dividing numbers, said second dividing numbers and sizes of said image areas;
a selecting section to select a specific image area, corresponding to a specific total image area for which a difference between said specific total image area and a size of said large-sized image is minimum among said total image areas calculated by said total-area calculating section;
a comparing section to compare said first dividing number of said specific image area with said second dividing number of said specific image area selected by said selecting section, so as to determine either said first dividing number or said second dividing number as a selected dividing number that is equal to or smaller than the other; and

an image dividing section to divide said bulk image data, stored in said image-data storing section, into said plurality of image data sets by employing said selected dividing number and a dividing pattern corresponding to said selected dividing number, so as to transmit said plurality of image data sets to said image outputting apparatus.

13. The controlling apparatus of claim 12, further comprising:

a duplication-width designating section to designate a duplication width of said divided images;

wherein said total-area calculating section calculates said total image areas, each of which correspond to each of said first dividing numbers and each of said second dividing numbers, according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where,

S: Total image area corresponding to First dividing number,
V: First longitudinal length,
M: First dividing number in longitudinal direction,
T: Duplication width designated by said duplication-width designating section,
H: First lateral length,
N: First dividing number in lateral direction,
S': Total image area corresponding to Second dividing number,
M': Second dividing number in longitudinal direction,
N': Second dividing number in lateral direction.

14. The controlling apparatus of claim 12,
wherein, when plural kinds of image areas correspond to a specific total image area for which a difference between said specific total image area and a size of said large-sized image is minimum among said total image areas calculated by said total-area calculating section, said selecting section selects an image area, a size of which is minimum among said plural kinds of image areas, as said specific image area.

15. The controlling apparatus of claim 9,
wherein a plurality of small-sized images are laid out on said large-sized image, and said large-sized image includes image areas, on which said plurality of small-sized images are laid out, and margin areas in which register marks, serving as working indicators for cutting, binding and/or multicolor printing operations, and punching holes are formed.

16. The controlling apparatus of claim 9,

wherein said image outputting apparatus is a color laser printer that outputs said divided images as printed color samples for conducting a proofreading operation.

17. A method for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, said method comprising the steps of:

storing in advance a first longitudinal length and a first lateral length of an image area recordable for said image outputting apparatus corresponding to a size of a recording medium to be employed;
storing said bulk image data of said large-sized image received from said external apparatus;
finding a second longitudinal length and a second lateral length of said large-sized image based on said image data stored in said step of storing said bulk image data;
calculating a first dividing number, based on a ratio between said first longitudinal length and said second longitudinal length and another ratio between said first lateral length and said second lateral length, and at a same time, calculating a second dividing number, based on a ratio between said first longitudinal length and said second lateral length and another ratio between said first lateral length and said second longitudinal length;
comparing said first dividing number with said second dividing number, so as to determine either said first dividing number or said second dividing number as a selected dividing number that is equal to or smaller than the other; and
dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

18. A method for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, said method comprising the steps of:

storing in advance first longitudinal lengths and first lateral lengths of an image areas recordable for said image outputting apparatus corresponding to sizes of plural kinds of recording mediums to be employed;
storing said bulk image data of said large-sized image received from said external apparatus;
finding a second longitudinal length and a second lateral length of said large-sized image based on said image data stored in said step of storing said bulk image data;
calculating first dividing numbers, based on ratios between said first longitudinal lengths and said second longitudinal length and other ratios between said first lateral lengths and said second lateral length, and at a same time, calculating second dividing numbers, based on ratios between said first longitudinal lengths and said second lateral length and other ratios between said first lateral lengths and said second longitudinal length;
selecting a specific image area, which corresponds to a minimum first dividing number or a minimum second dividing number among said first dividing numbers and said second dividing numbers, out of said image areas;
comparing said first dividing number of said specific image area with said second dividing number of said specific image area selected in said selecting step, so as to determine either said first dividing number or said second dividing number as a selected dividing number that is equal to or smaller than the other; and
dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

19. The method of claim 18,

wherein, when plural kinds of image areas correspond to said minimum first dividing number or said minimum second dividing number, said selecting section selects an image area, a size of which is minimum among said plural kinds of image areas, as said specific image area.

**20.** A method for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, said method comprising the steps of:

storing in advance first longitudinal lengths and first lateral lengths of an image areas recordable for said image outputting apparatus corresponding to sizes of plural kinds of recording mediums to be employed;

storing said bulk image data of said large-sized image received from said external apparatus;

finding a second longitudinal length and a second lateral length of said large-sized image based on said image data stored in said step of storing said bulk image data;

calculating first dividing numbers, based on ratios between said first longitudinal lengths and said second longitudinal length and other ratios between said first lateral lengths and said second lateral length, and at a same time, calculating second dividing numbers, based on ratios between said first longitudinal lengths and said second lateral length and other ratios between said first lateral lengths and said second longitudinal length;

calculating total image areas, based on said first dividing numbers, said second dividing numbers and sizes of said image areas;

selecting a specific image area, corresponding to a specific total image area for which a difference between said specific total image area and a size of said large-sized image is minimum among said total image areas calculated in said step of calculating said total image areas;

comparing said first dividing number of said specific image area with said second dividing number of said specific image area selected in said selecting step, so as to determine either said first dividing number or said second dividing number as a selected dividing number that is equal to or smaller than the other; and

dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

**21.** The method of claim 20, further comprising the step of:

designating a duplication width of said divided images;

wherein said total image areas, each of which correspond to each of said first dividing numbers and each of said second dividing numbers, are calculated according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where,

S: Total image area corresponding to First dividing number,
V: First longitudinal length,
M: First dividing number in longitudinal direction,
T: Duplication width designated by said duplication-width designating section,
H: First lateral length,
N: First dividing number in lateral direction,
S': Total image area corresponding to Second dividing number,
M': Second dividing number in longitudinal direction,
N': Second dividing number in lateral direction.

**22.** The method of claim 20,

wherein, when plural kinds of image areas correspond to a specific total image area for which a difference between said specific total image area and a size of said large-sized image is minimum among said total image areas calculated in said step of calculating said total image areas, an image area, a size of which is minimum among said plural kinds of image areas, is selected as said specific image area.

**23.** The method of claim 17,

wherein a plurality of small-sized images are laid out on said large-sized image, and said large-sized image includes image areas, on which said plurality of small-sized images are laid out, and margin areas in which register marks, serving as working indicators for cutting, binding and/or multicolor printing operations, and punching holes are formed.

**24.** The method of claim 17,

wherein said image outputting apparatus is a color laser printer that outputs said divided images as printed color samples for conducting a proofreading operation.

**25.** A computer program for executing an operation for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, said computer program comprising the functional steps of:

storing in advance a first longitudinal length and a first lateral length of an image area recordable for said image outputting apparatus corresponding to a size of a recording medium to be employed;

storing said bulk image data of said large-sized image received from said external apparatus;

finding a second longitudinal length and a second lateral length of said large-sized image based on said image data stored in said step of storing said bulk image data;

calculating a first dividing number, based on a ratio between said first longitudinal length and said second longitudinal length and another ratio between said first lateral length and said second lateral length, and at a same time, calculating a second dividing number, based on a ratio between said first longitudinal length and said second lateral length and another ratio between said first lateral length and said second longitudinal length;

comparing said first dividing number with said second dividing number, so as to determine either said first dividing number or said second dividing number as a selected dividing number that is equal to or smaller than the other; and

dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

26. A computer program for executing an operation for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, said computer program comprising the functional steps of:

storing in advance first longitudinal lengths and first lateral lengths of an image areas recordable for said image outputting apparatus corresponding to sizes of plural kinds of recording mediums to be employed;

storing said bulk image data of said large-sized image received from said external apparatus;

finding a second longitudinal length and a second lateral length of said large-sized image based on said image data stored in said step of storing said bulk image data;

calculating first dividing numbers, based on ratios between said first longitudinal lengths and said second longitudinal length and other ratios between said first lateral lengths and said second lateral length, and at a same time, calculating second dividing numbers, based on ratios between said first longitudinal lengths and said second lateral length and other ratios between said first lateral lengths and said second longitudinal length;

selecting a specific image area, which corresponds to a minimum first dividing number or a minimum second dividing number among said first dividing numbers and said second dividing numbers, out of said image areas;

comparing said first dividing number of said specific image area with said second dividing number of said specific image area selected in said selecting step, so as to determine either said first dividing number or said second dividing number as a selected dividing number that is equal to or smaller than the other; and

dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

27. The computer program of claim 26,

wherein, when plural kinds of image areas correspond to said minimum first dividing number or said minimum second dividing number, said selecting section selects an image area, a size of which is minimum among said plural kinds of image areas, as said specific image area.

28. A computer program for executing an operation for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, said computer program comprising the functional steps of:

storing in advance first longitudinal lengths and first lateral lengths of an image areas recordable for said image outputting apparatus corresponding to sizes of plural kinds of recording mediums to be employed;

storing said bulk image data of said large-sized image received from said external apparatus;

finding a second longitudinal length and a second lateral length of said large-sized image based on said image data stored in said step of storing said bulk image data;

calculating first dividing numbers, based on ratios between said first longitudinal lengths and said second longitudinal length and other ratios between said first lateral lengths and said second lateral length, and at a same time, calculating second dividing numbers, based on ratios between said first longitudinal lengths and said second lateral length and other ratios between said first lateral lengths and said second longitudinal length;

calculating total image areas, based on said first dividing numbers, said second dividing numbers and sizes of said image areas;

selecting a specific image area, corresponding to a specific total image area for which a difference between said specific total image area and a size of said large-sized image is minimum among said total image areas calculated in said step of calculating said total image areas;

comparing said first dividing number of said specific image area with said second dividing number of said specific image area selected in said selecting step, so as to determine either said first dividing number or said second dividing number as a selected dividing number that is equal to or smaller than the other; and

dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

29. The computer program of claim 28, further comprising the functional step of:

designating a duplication width of said divided images;

wherein said total image areas, each of which correspond to each of said first dividing numbers and each of said second dividing numbers, are calculated according to the following equations:

$$S = \{V \times M - T \times (M - 1)\} \times \{H \times N - T \times (N - 1)\}$$

$$S' = \{V \times M' - T \times (M' - 1)\} \times \{H \times N' - T \times (N' - 1)\}$$

where,

S:  Total image area corresponding to First dividing number,
V:  First longitudinal length,
M:  First dividing number in longitudinal direction,
T:  Duplication width designated by said duplication-width designating section,
H:  First lateral length,
N:  First dividing number in lateral direction,
S':  Total image area corresponding to Second dividing number,
M':  Second dividing number in longitudinal direction,
N':  Second dividing number in lateral direction.

30. The computer program of claim 28,
wherein, when plural kinds of image areas correspond to a specific total image area for which a difference between said specific total image area and a size of said large-sized image is minimum among said total image areas calculated in said step of calculating said total image areas, an image area, a size of which is minimum among said plural kinds of image areas, is selected as said specific image area.

31. The computer program of claim 25,
wherein a plurality of small-sized images are laid out on said large-sized image, and said large-sized image includes image areas, on which said plurality of small-sized images are laid out, and margin areas in which register marks, serving as working indicators for cutting, binding and/or multicolor printing operations, and punching holes are formed.

32. The computer program of claim 25,
wherein said image outputting apparatus is a color laser printer that outputs said divided images as printed color samples for conducting a proofreading operation.

33. A recording medium that retains a computer program for executing an operation for dividing a bulk image data of a large-sized image, received from an external apparatus, into a plurality of image data sets, each of which represents each of divided images included in said large-sized image, so as to transmit said plurality of image data sets to an image outputting apparatus that outputs said divided images based on said plurality of image data sets, wherein said computer program comprises the functional steps of:

storing in advance a first longitudinal length and a first lateral length of an image area recordable for said image outputting apparatus corresponding to a size of a recording medium to be employed;

storing said bulk image data of said large-sized image received from said external apparatus;

finding a second longitudinal length and a second lateral length of said large-sized image based on said image data stored in said step of storing said bulk image data;

calculating a first dividing number, based on a ratio between said first longitudinal length and said second longitudinal length and another ratio between said first lateral length and said second lateral length, and at a same time, calculating a second dividing number, based on a ratio between said first longitudinal length and said second lateral length and another ratio between said first lateral length and said second longitudinal length;

comparing said first dividing number with said second dividing number, so as to determine either said first dividing number or said second dividing number as a selected dividing number that is equal to or smaller than the other; and

dividing said bulk image data, stored in said step of storing said bulk image data, into said plurality of image data sets by employing said selected dividing number and a dividing pattern corresponding to said selected dividing number, so as to transmit said plurality of image data sets to said image outputting apparatus.

# FIG. 1

IMAGE DATA FOR COMPREHENSIVE LAYOUT

PS

3. COLOR LASER PRINTER

2. CONTROLLING APPARATUS

1. CLIENT TERMINAL

IMAGE DATA FOR FINAL OUTPUT

PS

4. RIP FOR CTP

Ripped Data

RIPPED IMAGE DATA

6. CTP

5. DCP CONTROLLING APPARATUS

7. DCP CREATING APPARATUS

USED FOR PRECISE DCP

EP 1 509 036 A2

# FIG. 2

```
                    ┌─────────┐
                    │  START  │
                    └────┬────┘
                         │
     ┌───────────────────┤
     │    ┌──────────────▼──────────────┐
     │    │  OUTPUT COMPREHENSIVE LAYOUT │────── S01
     │    │    (COLOR LASER PRINTER)     │
     │    └──────────────┬──────────────┘
     │                   │
     │  NO ⟨CHARACTER PROOF AND COLOR PROOF OK?⟩────── S02
     └─────⟨                              ⟩
                         │ YES
          ┌──────────────▼──────────────┐
          │  IMPOSE IMAGES ON CLIENT TERMINAL │────── S03
          └──────────────┬──────────────┘
                         │
          ┌──────────────▼──────────────┐
          │ RIP PROCESSING ON DATA FOR FINAL OUTPUT │────── S04
          │       CREATE RIPPED DATA     │
          └──────────────┬──────────────┘
     ┌───────────────────┤
     │    ┌──────────────▼──────────────┐
     │    │ DIVIDING-OUTPUT OF DCP (COLOR LASER PRINTER) │────── S05
     │    └──────────────┬──────────────┘
     │                   │
     │  NO ⟨      COLOR PROOF OK?      ⟩────── S06
     └─────⟨                          ⟩
                         │ YES
     ┌───────────────────┤
     │    ┌──────────────▼──────────────┐
     │    │         OUTPUT CTP          │────── S07
     │    └──────────────┬──────────────┘
     │                   │
     │  NO ⟨      COLOR PROOF OK?      ⟩────── S08
     └─────⟨                          ⟩
                         │ YES
          ┌──────────────▼──────────────┐
          │           PRINT             │────── S09
          └──────────────┬──────────────┘
                         │
                    ┌────▼────┐
                    │   END   │
                    └─────────┘
```

FIG. 3

FROM RIP 4 FOR CTP

IMAGE DATA ANALYZING SECTION — 21

IMAGE DATA STORING SECTION — 20

IMAGE REGION MEMORIZING SECTION — 22

DIVIDING-NUMBER/TOTAL-AREA COMPUTING SECTION — 23

OVERLAPPING WIDTH DESIGNATING SECTION — 24

SELECTING SECTION — 25

IMAGE DIVIDING SECTION — 26

PRIORITY DESIGNATING SECTION — 27

SCREEN PROCESSING SECTION — 28

TO COLOR LASER PRINTER 3

# FIG. 4

```
        ( START )
            │
            ▼
┌─────────────────────────────┐
│      STORE IMAGE DATA       │──── S10
└─────────────────────────────┘
            │
            ▼
┌─────────────────────────────┐
│ OBTAIN IMAGE DATA SIZE      │
│ (LATERAL X X                │──── S11
│ LONGITUDE Y mm) DESCRIBED   │
│ IN IMAGE DATA               │
└─────────────────────────────┘
            │
            ▼
┌─────────────────────────────┐
│ OBTAIN DIVIDING NUMBERS FOR │
│ RESPECTIVE MEDIA AND TOTAL  │──── S12
│ AREA OF ALLOWED IMAGE       │
│ OUTPUT REGIONS              │
└─────────────────────────────┘
            │
            ▼
┌─────────────────────────────┐
│ SELECT MEDIA SIZE AND       │
│ ROTATION/ NONROTATION       │──── S13
│ ACCORDING TO DIVIDING       │
│ NUMBER AND TOTAL AREA       │
└─────────────────────────────┘
            │
            ▼
┌─────────────────────────────┐
│ DIVIDING PROCESSING         │
│ ACCORDING TO MEDIA SIZE AND │──── S14
│ ROTATION/NONROTATION        │
└─────────────────────────────┘
            │
            ▼
┌─────────────────────────────┐
│ OBTAIN SINGLE DIVIDED       │──── S15
│ IMAGE DATA                  │
└─────────────────────────────┘
            │
            ▼
┌─────────────────────────────┐
│ COLOR ADJUSTMENT AND SCREEN │──── S16
│ PROCESSING ON IMAGE DATA    │
└─────────────────────────────┘
            │
            ▼
┌─────────────────────────────┐
│     DRAWING PROCESSING      │──── S17
└─────────────────────────────┘
            │
            ▼
  No ┌─────────────────────────────┐
◄────│   ALL OUTPUTS TERMINATED?   │──── S18
     └─────────────────────────────┘
            │ Yes
            ▼
        ( END )
```

FIG. 5

V x M' - T (M' - 1) [mm]

V x M - T (M - 1) [mm]

V [mm]

X [mm]

Y [mm]

T [mm]

T [mm]

X [mm]

Y [mm]

H [mm]

H x N' - T (N' - 1) [mm]

H x N - T (N - 1) [mm]

T [mm]

T [mm]

FIRST LONGITUDINAL DIVIDING NUMBER: M

SECOND LONGITUDINAL DIVIDING NUMBER: M'

FIRST LATERAL DIVIDING NUMBER: N

SECOND LATERAL DIVIDING NUMBER: N'

# FIG. 6

EXAMPLE :
85 mm

EXAMPLE :
20 mm

PRINTING MACHINE PUNCH HOLE

SIZE A4 (297 X 210 mm)

EXAMPLE : 160 mm

EXAMPLE : 6 mm

EXAMPLE : 40 mm

REGISTER MARK

CTP Plate SIZE
(EXAMPLE :
800 X 1030 mm)

# FIG. 7

EFFECTIVE IMAGE
REGION OF SIZE A3
(EXAMPLE: 287 X 410 mm)

EFFECTIVE IMAGE
REGION OF SIZE
A4 - 8 IMAGES
IMPOSITION
(EXAMPLE: 620 X 880 mm)

WASTE DUE TO LARGE
MARGIN REGION